(19) Europäisches Patentamt / European Patent Office / Office européen des brevets

(11) **EP 2 252 073 A1**

(12) **EUROPEAN PATENT APPLICATION**
published in accordance with Art. 153(4) EPC

(43) Date of publication:
**17.11.2010 Bulletin 2010/46**

(51) Int Cl.:
***H04N 17/00*** (2006.01)      ***H04N 7/26*** (2006.01)

(21) Application number: **09722268.1**

(22) Date of filing: **23.03.2009**

(86) International application number:
**PCT/JP2009/055679**

(87) International publication number:
**WO 2009/116666 (24.09.2009 Gazette 2009/39)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.03.2008 JP 2008074547**
**24.02.2009 JP 2009041457**

(71) Applicant: **Nippon Telegraph and Telephone Corporation**
**Chiyoda-ku**
**Tokyo 100-8116 (JP)**

(72) Inventors:
• **WATANABE, Keishiro**
  **Musashino-shi**
  **Tokyo 180-8585 (JP)**
• **OKAMOTO, Jun**
  **Musashino-shi**
  **Tokyo 180-8585 (JP)**
• **YAMAGISHI, Kazuhisa**
  **Musashino-shi**
  **Tokyo 180-8585 (JP)**

(74) Representative: **Samson & Partner**
**Widenmayerstrasse 5**
**80538 München (DE)**

(54) **METHOD, DEVICE, AND PROGRAM FOR OBJECTIVELY EVALUATING VIDEO QUALITY**

(57)    A bit string of a video encoded using motion-compensated inter-frame prediction and DCT and, more particularly, H.264 is received. A quantization parameter included in the received bit string is extracted, and its statistic is calculated. The subjective quality of the video is estimated based on the minimum value of the quantization parameter.

# FIG.15

**Description**

Technical Field

The present invention relates to a video quality objective assessment method, video quality objective assessment apparatus, and program, which, when estimating quality (subjective quality) experienced by a person who has viewed a video, objectively derive the subjective quality from the information of encoded bitstreams without conducting subjective quality assessment experiments, thereby detecting video quality degradation caused by encoding.

Background Art

Conventionally, a technique of objectively assessing video quality using encoding parameter information such as a bit rate or frame rate and the header information of IP packets has been examined to accurately and efficiently assess the subjective quality of a video viewed by a user of video delivery and communication services (Kazuhisa Yamagishi, Takanori Hayashi, "Video Quality Estimation Model for IPTV Services", Technical Report of IEICE, CQ2007-35, pp. 123-126, July. 2007 (reference 1)). There has also been examined a technique of objectively assessing video quality by combining encoded bitstream information and pixel signal information (D. Hands, "Quality Assurance for IPTV", ITU-T Workshop on "End-to-End QoE/QoS", June. 2006 (reference 2)).

Disclosure of Invention

Problems to be Solved by the Invention

The prior arts aim at constructing a technique of objectively assessing video quality while accurately suppressing the calculation amount. However, the technique described in reference 1 estimates subjective quality assuming an average scene, and cannot consider subjective quality variations depending on scenes. It is therefore impossible to implement accurate subjective quality estimation.
The technique described in reference 2. attempts to estimate subjective quality using encoded bitstreams and information obtained by adding, as sub information, encoded bit strings to decoded pixel information. Especially, H.264 needs an enormous calculation amount for decoding to pixel information, and is therefore difficult to execute in actuality.
Means of Solution to the Problem
In order to solve the above problems, the present invention comprises the steps of receiving a bit string of a video encoded using motion-compensated inter-frame prediction and DCT, performing a predetermined operation by inputting information included in the received bit string, and performing an operation of estimating the subjective quality of the video based on an operation result of the step of performing the predetermined operation.
More specifically, the present invention comprises the steps of detecting the I/P/B attribute of a frame/slice/ motion vector from a bitstream encoded by an encoding method using motion-compensated inter-frame prediction and DCT currently in vogue and, more particularly, H.264, extracting a motion vector and its data amount, extracting a DCT coefficient and its data amount, extracting encoding control information and its data amount, extracting a quantization coefficient/quantization parameter, and objectively estimating the subjective quality of the video by integrating these pieces of information.
In the present invention, since the bitstream is not decoded, video quality can be estimated by calculation in a small amount. Additionally, since the contents and data amounts of motion vectors and DCT coefficients, which are parameters capable of considering the difference in scene in the bitstream, are used to estimate the subjective quality, the subjective quality of the video can be estimated accurately.
According to the present invention, in the step of performing the predetermined operation, quantization information included in the bit string is extracted, and a statistic of the quantization information (for example, the minimum value of quantization parameters of H.264) is calculated. In the step of performing the operation of estimating the subjective quality, the operation of estimating the subjective quality of the video is performed based on the statistic of the quantization information (for example, the minimum value of quantization parameters of H.264).
In the step of performing the predetermined operation, information of a motion vector included in the bit string is extracted, and a statistic of the motion vector (for example, the kurtosis of vector magnitude) is calculated from the extracted information of the motion vector. In the step of performing the operation of estimating the subjective quality, the operation of estimating the subjective quality of the video is performed based on the statistic of the quantization information (for example, the minimum value of quantization parameters of H.264) and the statistic of the motion vector (for example, the kurtosis of vector magnitude).
In the step of performing the predetermined operation, information of an I slice, P slice, and B slice included in the bit string is extracted, and statistical information of the I slice, P slice, and B slice is calculated based on the extracted information of the I slice, P slice, and B slice. In the step of performing the operation of estimating the subjective quality, the operation of estimating the subjective quality of the video is performed based on the statistic of the quantization information (for example, the minimum value of quantization parameters of H.264) and the statistical information of the I slice, P slice, and B slice.

Note that in the step of performing the predetermined operation, information used for predictive encoding, information for transform encoding, and information used for encoding control, which are included in the bit string, may be extracted, and a bit amount used for predictive encoding, a bit amount used for transform encoding, and a bit amount used for encoding control may be calculated from the pieces of extracted information. In this case, in the step of performing the operation of estimating the subjective quality, the operation of estimating the subjective quality of the video is performed based on the bit amount used for predictive encoding, the bit amount used for transform encoding, and the bit amount used for encoding control, which represent the operation result of the step of performing the predetermined operation.

In this case, in the step of performing the predetermined operation, information of a motion vector included in the bit string is extracted, and a statistic of the motion vector (for example, the kurtosis of vector magnitude) is calculated from the extracted information of the motion vector. In the step of performing the operation of estimating the subjective quality, the operation of estimating the subjective quality of the video is performed based on the bit amount used for predictive encoding, the bit amount used for transform encoding, the bit amount used for encoding control, and the statistic of the motion vector (for example, the kurtosis of vector magnitude).

In the step of performing the predetermined operation, information of an I slice, P slice, and B slice included in the bit string is extracted, and statistical information of the I slice, P slice, and B slice is calculated based on the extracted information of the I slice, P slice, and B slice. In the step of performing the operation of estimating the subjective quality, the operation of estimating the subjective quality of the video is performed based on the bit amount used for predictive encoding, the bit amount used for transform encoding, the bit amount used for encoding control, and the statistical information of the I slice, P slice, and B slice.

Effects of the Invention

As described above, according to the present invention, information of bit strings (bitstreams) encoded by an encoding method using DCT and motion compensation and, more particularly, H.264 is used. This makes it possible to objectively estimate subjective quality at a high accuracy while suppressing the calculation amount. Replacing a subjective quality assessment method or a conventional objective quality assessment method with the present invention obviates the need for a lot of labor and time. Hence, subjective quality sensed by a user in a video transmission service can be managed on a large scale and in real time.

Brief Description of Drawings

Fig. 1 is a view for explaining a method of deriving the minimum value of a quantization parameter in a selected frame;
Fig. 2 is a view for explaining the position of a motion vector deriving target frame;
Fig. 3 is a view showing the positional relationship between a motion vector deriving target frame and a reference frame;
Fig. 4 is a view showing the positional relationship between a motion vector deriving target frame and a reference frame;
Fig. 5 is a block diagram showing the arrangement of a video quality objective assessment apparatus;
Fig. 6 is a functional block diagram showing an arrangement according to the first embodiment of the present invention;
Fig. 7 is a functional block diagram showing an arrangement according to the second embodiment of the present invention;
Fig. 8 is a functional block diagram showing an arrangement according to the third embodiment of the present invention;
Fig. 9 is a functional block diagram showing an arrangement according to the fourth embodiment of the present invention;
Fig. 10 is a functional block diagram showing an arrangement according to the fifth embodiment of the present invention;
Fig. 11 is a functional block diagram showing an arrangement according to the sixth embodiment of the present invention;
Fig. 12 is a functional block diagram showing an arrangement according to the seventh embodiment of the present invention;

Fig. 13 is a functional block diagram showing an arrangement according to the eighth embodiment of the present invention;

Fig. 14 is a functional block diagram showing an arrangement according to the ninth embodiment of the present invention;

Fig. 15 is a flowchart illustrating a processing operation according to the first embodiment of the present invention;

Fig. 16 is a flowchart illustrating a processing operation according to the second embodiment of the present invention;

Fig. 17 is a flowchart illustrating a processing operation according to the third embodiment of the present invention;

Fig. 18 is a flowchart illustrating a processing operation according to the fourth embodiment of the present invention;

Fig. 19 is a flowchart illustrating a processing operation according to the fifth embodiment of the present invention;

Fig. 20 is a flowchart illustrating a processing operation according to the sixth embodiment of the present invention;

Fig. 21 is a flowchart illustrating a processing operation according to the seventh embodiment of the present invention;

Fig. 22 is a flowchart illustrating a processing operation according to the eighth embodiment of the present invention;

Fig. 23 is a flowchart illustrating a processing operation according to the ninth embodiment of the present invention;

Fig. 24A is a graph showing the characteristics of quantization coefficients/parameters;

Fig. 24B is a graph showing the characteristics of quantization coefficients/parameters;

Fig. 25A is a graph showing a result of accuracy comparison with a general quality estimation model; and

Fig. 25B is a graph showing a result of accuracy comparison with a general quality estimation model.

Best Mode for Carrying Out the Invention

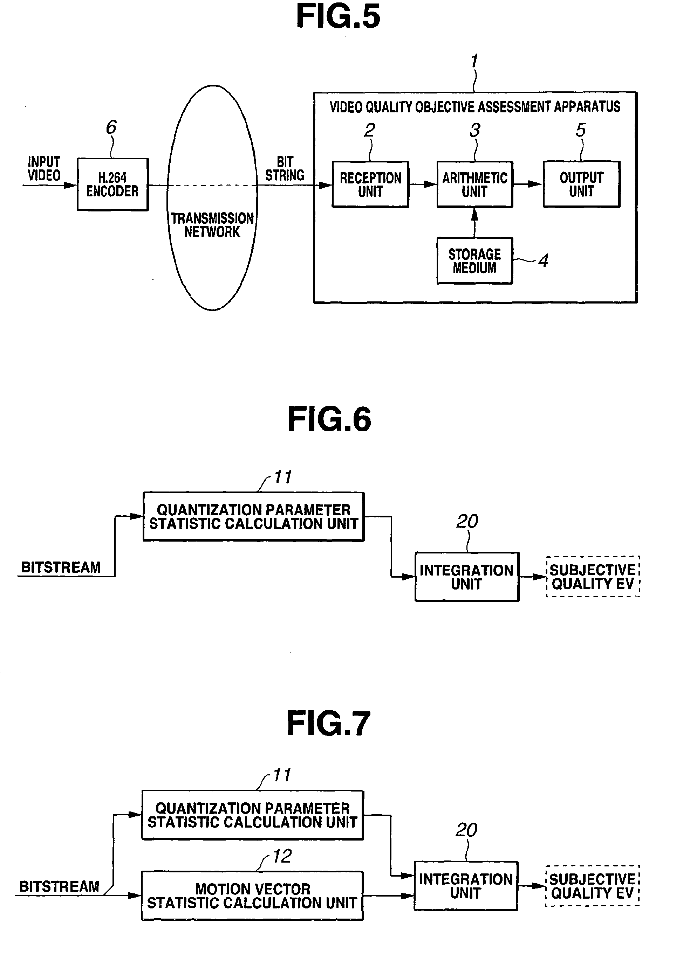

An embodiment of the present invention will now be described with reference to the accompanying drawings. Fig. 5 is a block diagram showing the arrangement of a video quality objective assessment apparatus according to an embodiment of the present invention. As shown in Fig. 5, a video quality objective assessment apparatus 1 includes a reception unit 2, arithmetic unit 3, storage medium 4, and output unit 5. An H.264 encoder 6 shown in Fig. 5 encodes an input video by H.264 to be described later. The encoded video bit string is communicated through the transmission network as a transmission packet and transmitted to the video quality objective assessment apparatus 1.

The reception unit 2 of the video quality objective assessment apparatus 1 receives the transmission packet, i.e., the encoded bit string. The CPU reads out and executes a program stored in the storage medium 4, thereby implementing the functions of the arithmetic unit 3. More specifically, the arithmetic unit 3 performs various kinds of arithmetic processing to be described later in the first to eighth embodiments using the information of the bit string received by the reception unit 2, and outputs the arithmetic processing result to the output unit 5 such as a display unit, thereby estimating the subjective quality of the video.

(First Embodiment)

In the first embodiment, a quantization parameter statistic calculation unit 11 and an integration unit 20 are provided, as shown in Fig. 6. Subjective quality EV is estimated using the information of quantization parameters, which is quantization information existing in the bitstream of an assessment video V encoded by H.264. This method is theoretically applicable to an encoding method using DCT coefficients and motion compensation.

The procedure of this embodiment will briefly be described next. Referring to Fig. 6, an encoded bitstream is first input to the quantization parameter statistic calculation unit 11. The quantization parameter statistic calculation unit 11 extracts quantization parameters from the bitstream, and derives a representative value $QP_{min}$ of the quantization parameters in accordance with the following algorithm. Next, the integration unit 20 estimates the subjective quality EV of the assessment video V from the representative value $QP_{min}$ of the quantization parameters in accordance with the following algorithm.

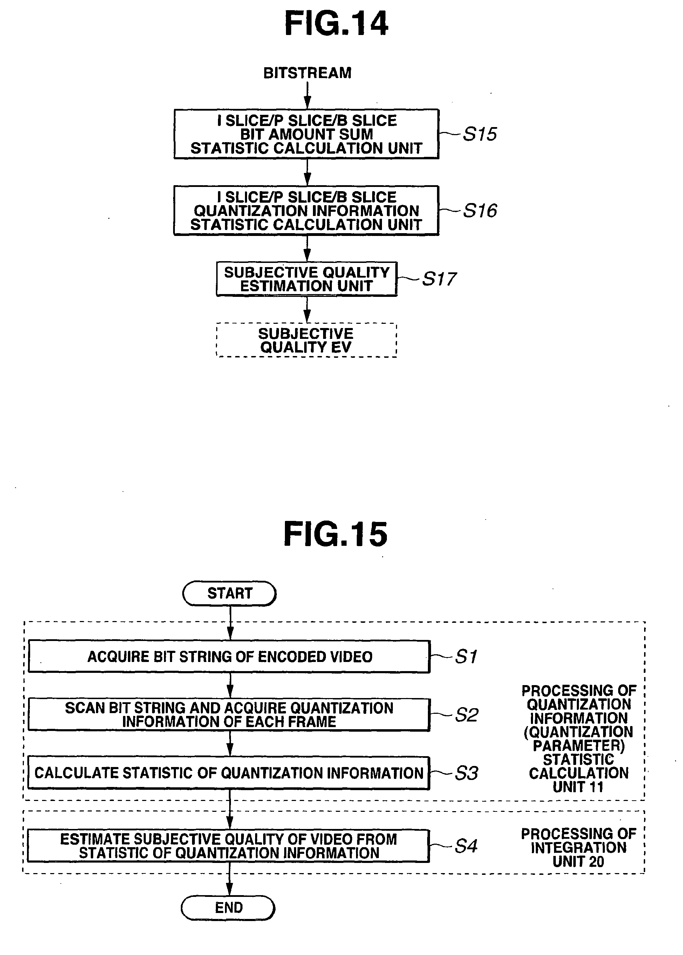

This procedure is illustrated by the flowchart of Fig. 15. The specifications of an H.264 bit string are described in reference 1 (ITU-T H.264, "Advanced video coding for generic audiovisual services", Feb. 2000). Pieces of information of quantization parameters set in macroblocks in accordance with the specifications of H.264 are extracted.

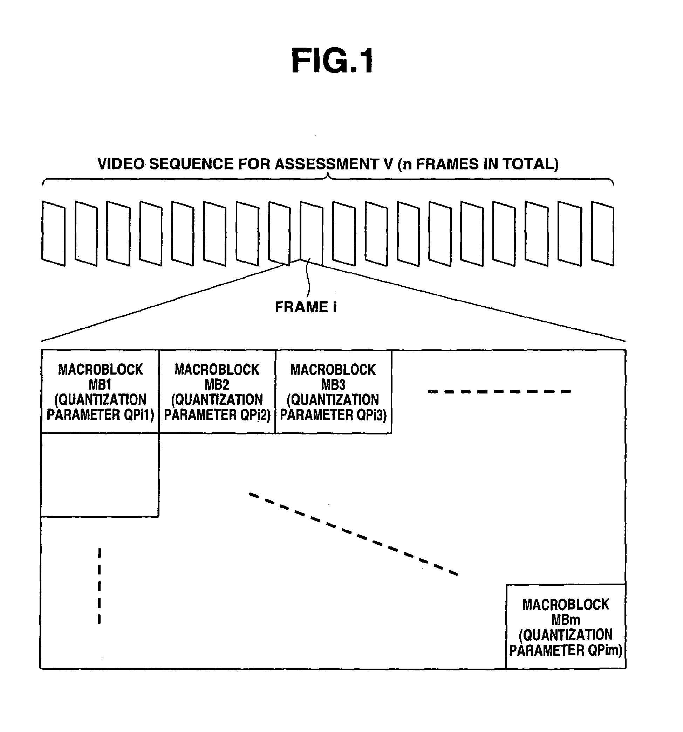

As shown in Fig. 1, first, the representative value $QP_{min}(i)$ of quantization parameters in each frame is derived using the quantization parameter values of all macroblocks (m macroblocks in total) existing in each frame of the assessment video V, where i is the frame number (video playback starts from i = 1 and ends at i = n). $QP_{min}(i)$ is derived by

[Mathematical 1]

$$QP_{min}(i) = \min_{j=1}^{j=m} QP_{ij}$$

where $QP_{ij}$ is the quantization parameter of the jth macroblock in the ith frame (Fig. 1). The operator

[Mathematical 2]

$$\min_{j=1}^{j=m} A_j$$

outputs a minimum value by referring to natural numbers $A_1$ to $A_m$. Instead, an arbitrary statistic (e.g., maximum value or average value) other than the minimum value may be derived.

With the above processing, a quantization parameter having the minimum value in the ith frame is derived. When a quantization parameter becomes smaller, finer quantization is applied to the macroblock. Hence, a macroblock which undergoes finest quantization is derived by the processing. The more complex a video image is, the finer the quantization needs to be. That is, the above-described processing aims at specifying a macroblock having the most complex image in the ith frame.

Using the thus derived representative value $QP_{min}(i)$ of the quantization parameters of each frame, the representative value $QP_{min}$ of all quantization parameters of the assessment video is derived next. $QP_{min}$ is derived by

[Mathematical 3]

$$QP_{min} = \underset{i=1}{\overset{i=n}{ave}}\, QP_{min}(i)$$

The operator

[Mathematical 4]

$$\underset{j=1}{\overset{j=m}{ave}}\, A_j$$

outputs an average value by referring to the natural numbers $A_1$ to $A_m$.

Using thus derived $QP_{min}$, the subjective quality EV of the assessment video V is estimated. Considering nonlinearity that exists between the subjective quality EV and the representative value $QP_{min}$ of the quantization parameters in H. 264, the subjective quality EV is derived by

[Mathematical 5]

$$EV = \frac{b}{1 + \exp\left(\dfrac{QP_{min} - a}{c}\right)} + d$$

where a, b, c, and d are coefficients optimized by conducting subjective assessment experiments and performing regression analysis in advance. Note that as the scale of the subjective quality EV, ACR described in reference 2 (ITU-T P.910, "TELEPHONE TRANSMISSION QUALITY, TELEPHONE INSTALLATIONS, LOCAL LINE NETWORKS", Sep. 1999), or DSIS or DSCQS described in reference 3 (ITU-R BT.500, "Methodology for the subjective assessment of the quality of television pictures", 2002) is usable. Using the quantization parameter $QP_{min}(i)$ of each frame, a statistic of $QP_{min}(i)$ such as an average value $QP_{ave}$ of $QP_{min}(i)$ or a maximum value $QP_{max}$ may be used in place of $QP_{min}$.

(Second Embodiment)

In the second embodiment, a quantization parameter statistic calculation unit 11, motion vector statistic calculation unit 12, and integration unit 20 are provided, as shown in Fig. 7. Subjective quality EV of an assessment video V encoded by H.264 is objectively estimated using not only quantization parameters used in H.264 encoding but also the information of motion vectors. This method is theoretically applicable to an encoding method using DCT coefficients and motion compensation.

The procedure of this embodiment will briefly be described next. Referring to Fig. 7, an encoded bitstream is first input to the quantization parameter statistic calculation unit 11 and the motion vector statistic calculation unit 12.

The quantization parameter statistic calculation unit 11 extracts quantization parameters from the bitstream, and derives a representative value $QP_{min}$ of the quantization parameters in accordance with the following algorithm. The motion vector statistic calculation unit 12 extracts motion vectors from the bitstream, and derives a representative value $MV_{kurt}$ of the motion vectors in accordance with the following algorithm. Next, the integration unit 20 estimates the subjective quality EV of the assessment video V from the representative value $QP_{min}$ of the quantization parameters and the representative value $MV_{kurt}$ of the motion vectors in accordance with the following algorithm.

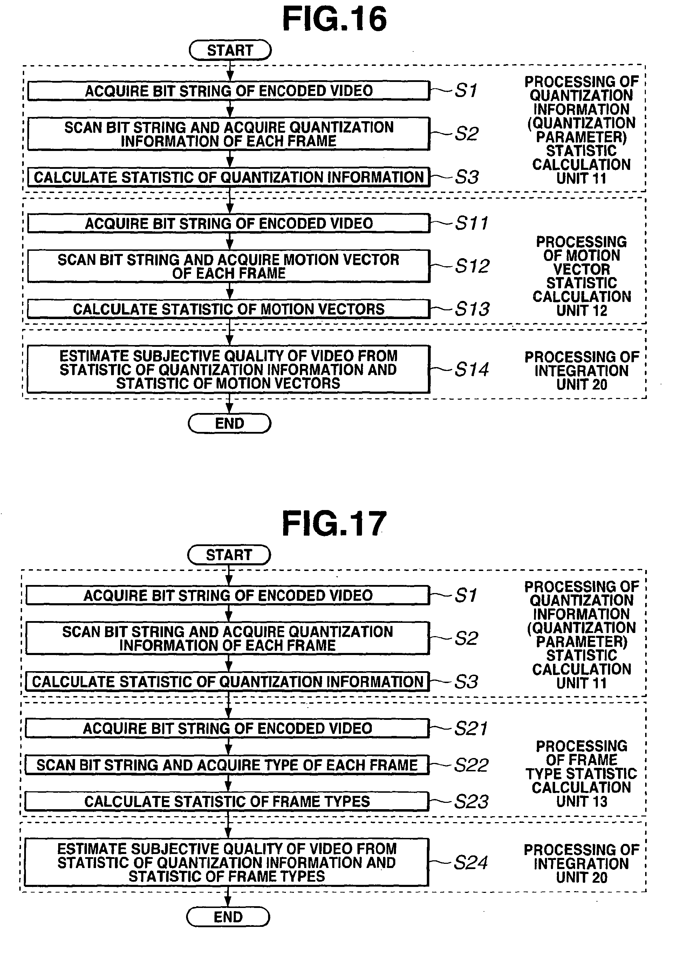

This procedure is illustrated by the flowchart of Fig. 16. The specifications of an H.264 bit string are described in reference 1. Pieces of information of quantization parameters set in macroblocks and motion vectors set in macroblocks/sub macroblocks in accordance with the specifications of H.264 are extracted.

As for the quantization parameters, $QP_{min}$ (instead, a statistic of quantization parameters described in the first embodiment may be used) described in the first embodiment is used to derive EV.

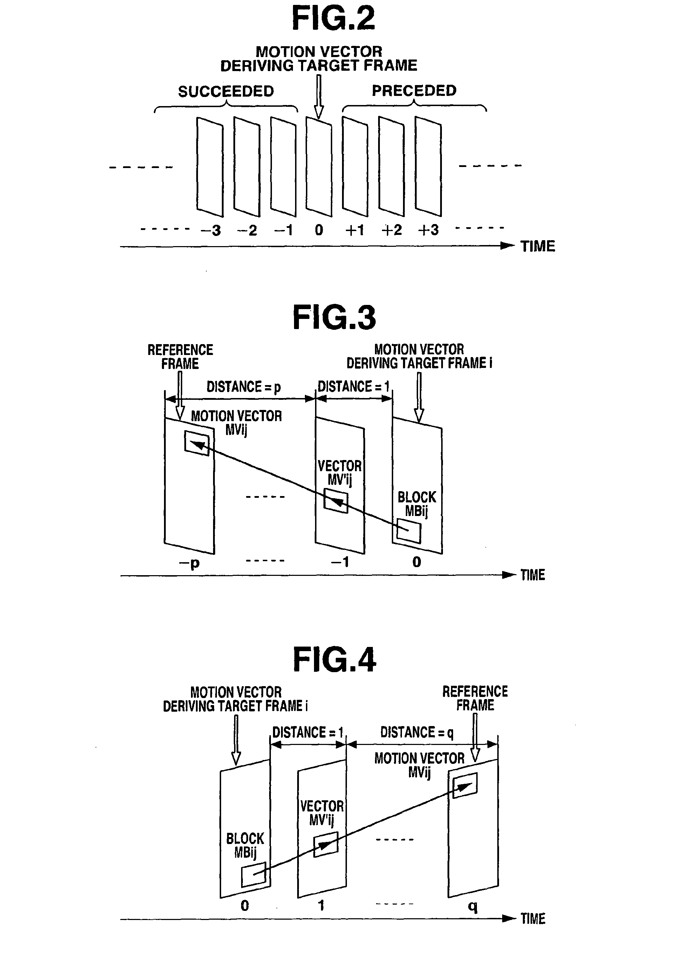

The representative value of motion vectors will be described with reference to Figs. 2, 3, and 4. As shown in Fig. 2, in H.264, two arbitrary reference frames, which need not always be preceded and succeeded frames, can be selected for each macroblock/sub macroblock so as to be used to derive a motion vector. To normalize the magnitude of a motion vector set for each macroblock/sub macroblock, the macroblock/sub macroblock is projected to one preceded frame or one succeeded frame of the motion vector deriving target frame. Detailed processing will be explained with reference to Figs. 3 and 4.

Fig. 3 illustrates a case in which the reference frame of a jth block $MB_{ij}$ in a motion vector deriving target frame i is the (p+1)th frame behind the frame i. As shown in Fig. 3, a motion vector $MV_{ij}$ exists from the motion vector deriving target frame i to the reference frame. $MV_{ij}$ is projected onto a vector $MV'_{ij}$ of the first frame behind the motion vector deriving target frame i by

[Mathematical 6]

$$MV'_{ij} = \frac{1}{p+1} MV_{ij}$$

Fig. 4 illustrates a case in which the reference frame of the jth block $MB_{ij}$ in the motion vector deriving target frame i is the (q+1)th frame ahead of the frame i. As shown in Fig. 4, the motion vector $MV_{ij}$ exists from the motion vector deriving target frame i to the reference frame. $MV_{ij}$ is projected onto the vector $MV'_{ij}$ of the first frame ahead of the motion vector deriving target frame i by

[Mathematical 7]

$$MV'_{ij} = \frac{1}{q+1} MV_{ij}$$

With the above processing, a motion vector set for each macroblock/sub macroblock j ($1 \leq j \leq x$) of the motion vector deriving target frame i can be projected onto a vector on the (i$\pm$1)th frame, where x is the number of macroblocks in the frame i.

Using the thus derived vector $MV'_{ij}$ on the motion vector deriving target frame i, a kurtosis Kurt(i) is derived as the statistic of the motion vector deriving target frame i by the following equation. Various kinds of statistics such as an average value, maximum value, minimum value, and variance are usable in place of the kurtosis Kurt(i).

In the following equation,

[Mathematical 8]

$$MV'_{ij} \mid i^{\forall}, j^{\forall}$$

represents the magnitude of the vector.

[Mathematical 9]

$$MV_{kurt}(i) = \frac{x(x + 1)}{(x - 1)(x - 2)(x - 3)} \sum_{j=1}^{x} \left( \frac{MV'_{ij} - \frac{1}{x} \sum_{k=1}^{x} MV'_{ik}}{\sqrt{\frac{1}{x - 1} \sum_{l=1}^{x} \left( MV'_{ij} - \frac{1}{x} \sum_{k=1}^{x} MV'_{ik} \right)}} \right) - 3 \frac{(x - 1)^2}{(x - 2)(x - 3)}$$

Using the thus derived representative value $MV_{kurt}$ (i) of the motion vectors in each frame, the representative value $MV_{kurt}$ of all motion vectors of the assessment video is derived. $MV_{kurt}$ is derived by

[Mathematical 10]

$$MV_{kurt} = \underset{i=1}{\overset{i=n}{ave}} MV_{kurt}(i)$$

The operator

[Mathematical 11]

$$\underset{j=1}{\overset{j=m}{ave}} A_j$$

outputs an average value by referring to natural numbers $A_1$ to $A_m$, where n is the total number of frames of the assessment video V.

The kurtosis of the motion vectors is used here in order to express the motion vector distribution and thus quantify a uniform motion or a motion of a specific object in the video. A feature amount (e.g., variance or skewness) having a similar physical meaning may be used.

Using thus derived $MV_{kurt}$ and $QP_{min}$, the subjective quality EV of the assessment video V is estimated. EV is derived by the following equation. $MV_{kurt}$ in the following equation represents the magnitude of the vector.

[Mathematical 12]

$$EV = \frac{b}{1 + exp\left( \frac{eQP_{min} + fMV_{kurt} + gQP_{min}MV_{kurt} - a}{c} \right)} + h \log(MV_{kurt})$$
$$+ iMV_{kurt} + j \log(QP_{min}) + kQP_{min} + lQP_{min}MV_{kurt} + m \log(MV_{kurt})\log(QP_{min}) + d$$

where a, b, c, d, e, f, g, h, i, j, k, l, and m are coefficients optimized by conducting subjective assessment experiments and performing regression analysis in advance. Note that as the scale of EV, ACR described in reference 2 or DSIS or DSCQS described in reference 3 is usable.

(Third Embodiment)

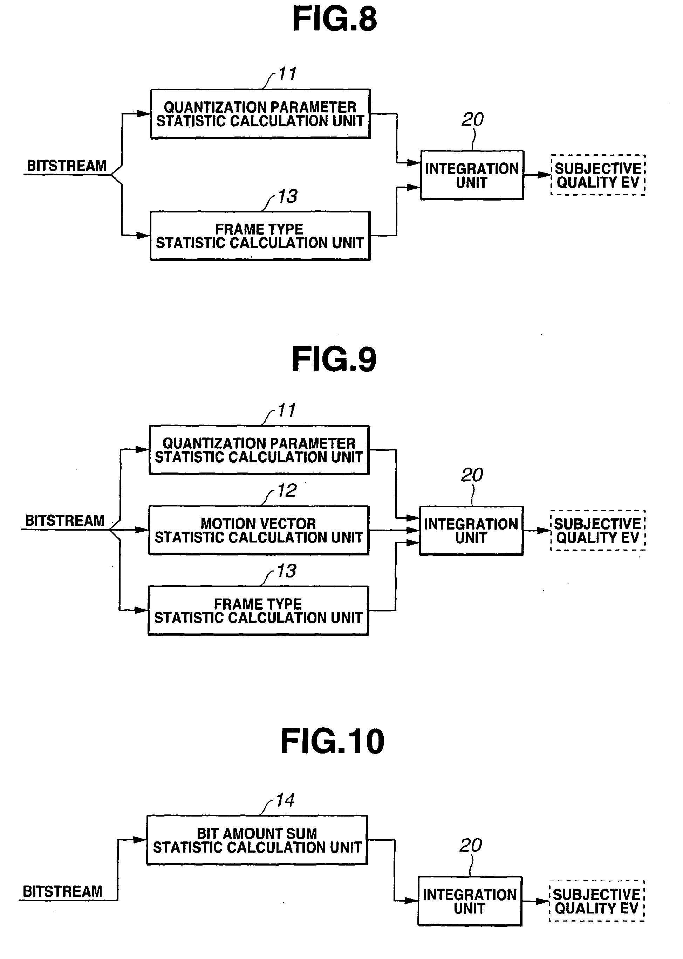

In the third embodiment, a quantization parameter statistic calculation unit 11, frame type statistic calculation unit 13, and integration unit 20 are provided, as shown in Fig. 8. Subjective quality EV of an assessment video V encoded by H.264 is objectively estimated using not only quantization parameters used in H.264 encoding but also the statistical information of I slices, P slices, and B slices. Note that a switching I slice is regarded as an I slice, and a switching P slice is regarded as a P slice. This method is theoretically applicable to an encoding method using DCT coefficients and motion compensation.

The procedure of this embodiment will briefly be described next. Referring to Fig. 8, an encoded bitstream is first input to the quantization parameter statistic calculation unit 11 and the frame type statistic calculation unit 13. The quantization parameter statistic calculation unit 11 extracts quantization parameters from the bitstream, and derives a representative value $QP_{min}$ of the quantization parameters in accordance with the following algorithm. The frame type statistic calculation unit 13 extracts a frame type from the bitstream, and derives a frame type statistic R in accordance with the following algorithm. Next, the integration unit 20 estimates the subjective quality EV of the assessment video V from the representative value $QP_{min}$ of the quantization parameters and the frame type statistic R in accordance with the following algorithm.

This procedure is illustrated by the flowchart of Fig. 17. The specifications of an H.264 bit string are described in reference 1. Pieces of information of quantization parameters set in macroblocks and I/P/B attributes set for slices in accordance with the specifications of H.264 are extracted.

As for the quantization parameters, $QP_{min}$ (instead, a statistic of quantization parameters described in the first embodiment may be used) described in the first embodiment is used to derive EV.

As for the I/P/B attribute set for each slice, $S_I$ is derived by counting I slices in the assessment video, $S_P$ is derived by counting P slices, and $S_B$ is derived by counting B slices. Ratios $R_{SI}$, $R_{SP}$, $R_{SB}$, and $R_{SPB}$ of the slice counts to the total number of slices are derived by the following equation. Basically, when the number of difference slices such as P slices or B slices from other slices increases, the quality per slice improves theoretically. On the other hand, when the number of I slices increases, the quality per slice degrades. That is, the ratio of slices of each type with respect to the total number of slices is closely related to the quality, and therefore, the parameters are introduced. The above processing may be executed using not the slices but frames or blocks of I/P/B attributes.

[Mathematical 13]

$$R_{S_I} = \frac{S_I}{S_I + S_P + S_B}, \quad R_{S_P} = \frac{S_P}{S_I + S_P + S_B}, \quad R_{S_B} = \frac{S_B}{S_I + S_P + S_B}, \quad R_{S_{PB}} = \frac{S_P + S_B}{S_I + S_P + S_B}$$

Correlations to subjective quality derived in advance by conducting subjective assessment experiments and performing regression analysis using these parameters are compared, and a parameter corresponding to the highest subjective quality estimation accuracy is defined as R.

Using thus derived R and $QP_{min}$, the subjective quality EV of the assessment video V is estimated. EV is derived by

[Mathematical 14]

$$EV = \frac{b}{1 + \exp\left(\frac{eQP_{min} + fR + gQP_{min}R - a}{c}\right)} + h\log(R)$$
$$+ iR + j\log(QP_{min}) + kQP_{min} + lQP_{min}R + m\log(R)\log(QP_{min}) + d$$

where a, b, c, d, e, f, g, h, i, j, k, l, and m are coefficients optimized by conducting subjective assessment experiments and performing regression analysis in advance. Note that as the scale of EV, ACR described in reference 2 or DSIS or DSCQS described in reference 3 is usable.

(Fourth Embodiment)

In the fourth embodiment, a quantization parameter statistic calculation unit 11, motion vector statistic calculation unit 12, frame type statistic calculation unit 13, and integration unit 20 are provided, as shown in Fig. 9. Subjective quality EV of an assessment video V encoded by H.264 is objectively estimated using not only quantization parameters used in H.264 encoding but also the information of motion vectors and I slices, P slices, and B slices. Note that a switching I slice is regarded as an I slice, and a switching P slice is regarded as a P slice.

The procedure of this embodiment will briefly be described next. Referring to Fig. 9, an encoded bitstream is first input to the quantization parameter statistic calculation unit 11, motion vector statistic calculation unit 12, and the frame type statistic calculation unit 13. The quantization parameter statistic calculation unit 11 extracts quantization parameters from the bitstream, and derives a representative value $QP_{min}$ of the quantization parameters in accordance with the following algorithm. The motion vector statistic calculation unit 12 extracts motion vectors from the bitstream, and derives a representative value $MV_{kurt}$ of the motion vectors in accordance with the following algorithm. The frame type statistic calculation unit 13 extracts a frame type from the bitstream, and derives a frame type statistic R in accordance with the following algorithm. Next, the integration unit 20 estimates the subjective quality EV of the assessment video V from the representative value $QP_{min}$ of the quantization parameters, the representative value $MV_{kurt}$ of the motion vectors, and the frame type statistic R in accordance with the following algorithm.

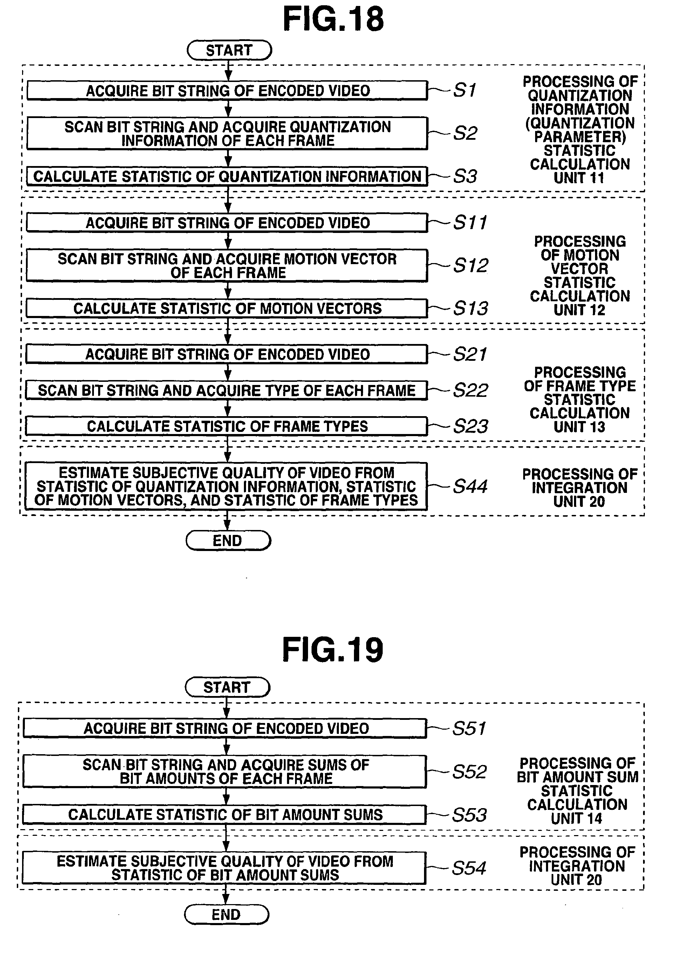

This procedure is illustrated by the flowchart of Fig. 18. The specifications of an H.264 bit string are described in reference 1. Pieces of information of quantization parameters set in macroblocks in accordance with the specifications of H.264, I/P/B attributes set for slices, and motion vectors set for macroblocks/sub macroblocks are extracted.

As for the quantization parameters, $QP_{min}$ (instead, a statistic of quantization parameters described in the first embodiment may be used) described in the first embodiment is used to derive EV.

As for the motion vectors, $MV_{kurt}$ described in the second embodiment is used to derive EV.

As for the I slices, P slices, and B slices, R described in the third embodiment is used.

Using thus derived $MV_{kurt}$, R, and $QP_{min}$, the subjective quality EV of the assessment video V is estimated. EV is derived by the following equation. $MV_{kurt}$ in the equation below represents the magnitude of the vector.

[Mathematical 15]

$$EV = \frac{b}{1 + \exp\left(\dfrac{eQP_{min} + fR + gMV_{kurt} + hQP_{min}R + iR_{S_I}MV_{kurt} + jMV_{kurt}QP_{min} + kQP_{min}RMV_{kurt} - a}{c}\right)}$$
$$+ l\log(R) + mR + n\log(QP_{min}) + oQP_{min} + p\log(MV_{kurt}) + qMV_{kurt} + rQP_{min}R + sRMV_{kurt}$$
$$+ tMV_{kurt}QP_{min} + uQP_{min}RMV_{kurt} + v\log(QP_{min})\log(R) + w\log(MV_{kurt})\log(R) + x(MV_{kurt})\log(QP_{min})$$
$$+ y\log(QP_{min})\log(R)\log(MV_{kurt}) + d$$

where a, b, c, d, e, f, g, h, i, j, k, l, m, o, p, q, r, s, t, u, v, w, x, and y are coefficients optimized by conducting subjective assessment experiments and performing regression analysis in advance. Note that as the scale of EV, ACR described in reference 2 or DSIS or DSCQS described in reference 3 is usable.

(Fifth Embodiment)

In the fifth embodiment, a bit amount sum statistic calculation unit 14 and an integration unit 20 are provided, as shown in Fig. 10. Subjective quality EV is estimated using bit amounts used for predictive encoding, bit amounts used for transform encoding, and bit amounts used for encoding control of the bitstream of an assessment video V encoded by H.264. This method is theoretically applicable to an encoding method using DCT coefficients and motion compensation.

The procedure of this embodiment will briefly be described next. Referring to Fig. 10, an encoded bitstream is first input to the bit amount sum statistic calculation unit 14. The bit amount sum statistic calculation unit 14 extracts bit amount sums from the bitstream, and derives a representative value $Bit_{max}$ of the bit amount sums in accordance with the following algorithm. Next, the integration unit 20 estimates the subjective quality EV of the assessment video V from the representative value $Bit_{max}$ of the bit amount sums in accordance with the following algorithm.

This procedure is illustrated by the flowchart of Fig. 19. The specifications of an H.264 bit string are described in reference 1 described above. Pieces of information of bit amounts used for predictive encoding, bit amounts used for transform encoding, and bit amounts used for encoding control set for macroblocks in accordance with the specifications of H.264 are derived.

As shown in Fig. 19, first, for all frames of the assessment video V, the representative value $Bit_{max}(i)$ of the bit amount sums in each frame is derived using the sum of the bit amounts used for predictive encoding, the bit amounts used for transform encoding, and the bit amounts used for encoding control of all macroblocks (m macroblocks in total) existing in each frame, where i is the frame number (video playback starts from i = 1 and ends at i = n). $Bit_{max}(i)$ is derived by

[Mathematical 16]

$$Bit_{max}(i) = \max_{j=1}^{j=m} Bit_{ij}$$

where $Bit_{ij}$ represents the sum of bit amounts of the jth macroblock in the ith frame. The operator

[Mathematical 17]

$$\max_{j=1}^{j=m} A_j$$

outputs a maximum value by referring to natural numbers $A_1$ to $A_m$. Instead, an arbitrary statistic (e.g., minimum value or average value) other than the maximum value may be derived.

With the above processing, a bit amount sum having the maximum value in the ith frame is derived. When a bit amount sum becomes larger, encoding processing of allocating a larger bit amount is applied to the macroblock. Hence, the bit amount sum of a macroblock that is hard to efficiently process is derived by the processing.

Using the thus derived representative value $Bit_{max}(i)$ of the bit amount sums of each frame, the representative value $Bit_{max}$ of all bit amount sums of the assessment video is derived next. $Bit_{max}$ is derived by

[Mathematical 18]

$$Bit_{max} = \underset{i=1}{\overset{i=n}{ave}}\, Bit_{max}(i)$$

The operator

[Mathematical 19]

$$\underset{j=1}{\overset{j=m}{ave}}\, A_j$$

outputs an average value by referring to the natural numbers $A_1$ to $A_m$.

Using thus derived $Bit_{max}$, the subjective quality EV of the assessment video V is estimated. Considering nonlinearity that exists between the subjective quality EV and the representative value $Bit_{max}$ of the bit amount sums in H.264, the subjective quality EV is derived by

[Mathematical 20]

$$EV = \frac{b}{1 + \exp\left(\dfrac{Bit_{max} - a}{c}\right)} + d$$

where a, b, c, and d are coefficients optimized by conducting subjective assessment experiments and performing regression analysis in advance. Note that as the scale of EV, ACR described in reference 2 or DSIS or DSCQS described in reference 3 is usable. Using the representative value $Bit_{max}(i)$ of the bit amount sums of each frame, a statistic of $Bit_{max}(i)$ such as an average value $Bit_{ave}$ of $Bit_{max}(i)$ or a minimum value $Bit_{min}$ may be used in place of $Bit_{max}$.

(Sixth Embodiment)

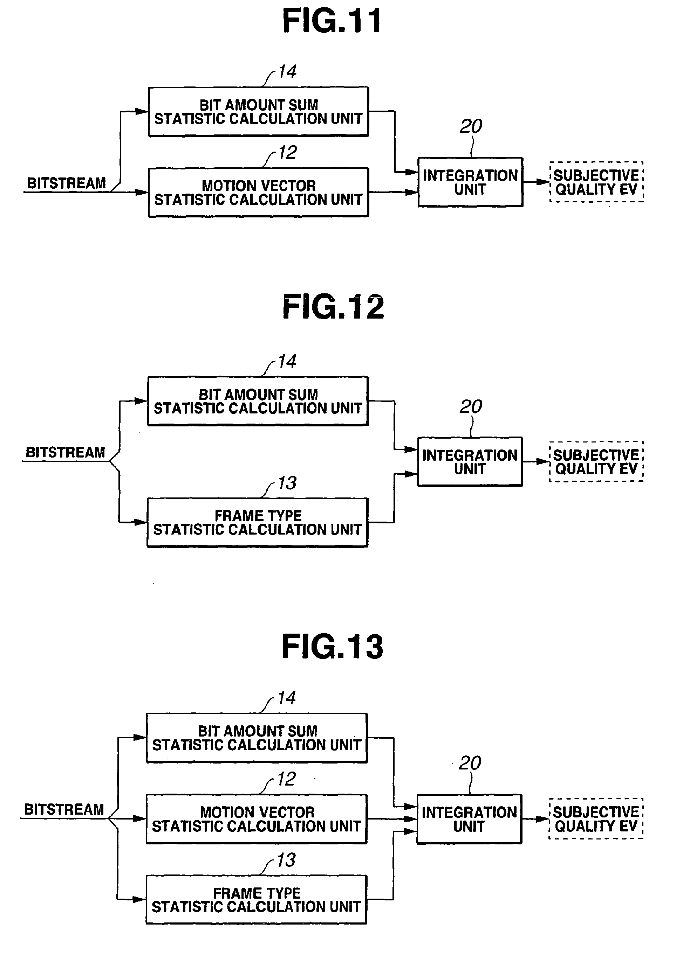

In the sixth embodiment, a bit amount sum statistic calculation unit 14, motion vector statistic calculation unit 12, and integration unit 20 are provided, as shown in Fig. 11. Subjective quality EV of an assessment video V encoded by H.264 is objectively estimated using bit amounts used for predictive encoding, bit amounts used for transform encoding, and bit amounts used for encoding control of the bitstream used in H.264 encoding. This method is theoretically applicable to an encoding method using DCT coefficients and motion compensation.

The procedure of this embodiment will briefly be described next. Referring to Fig. 11, an encoded bitstream is first input to the bit amount sum statistic calculation unit 14 and the motion vector statistic calculation unit 12. The bit amount sum statistic calculation unit 14 extracts bit amount sums from the bitstream, and derives a representative value $Bit_{max}$ of the bit amount sums in accordance with the following algorithm. The motion vector statistic calculation unit 12 extracts motion vectors from the bitstream, and derives a representative value $MV_{kurt}$ of the motion vectors in accordance with the following algorithm. Next, the integration unit 20 estimates the subjective quality EV of the assessment video V from the representative value $Bit_{max}$ of the bit amount sums and the representative value $MV_{kurt}$ of the motion vectors in accordance with the following algorithm.

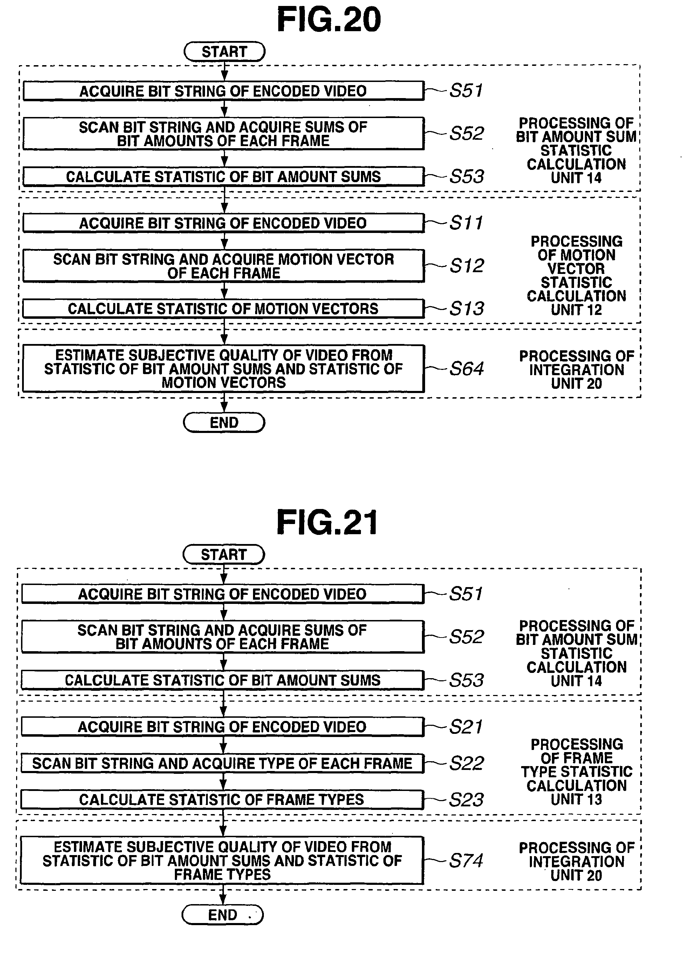

This procedure is illustrated by the flowchart of Fig. 20. The specifications of an H.264 bit string are described in reference 1. Pieces of information of quantization parameters set in macroblocks/sub macroblocks; bit amounts used for predictive encoding, bit amounts used for transform encoding, and bit amounts used for encoding control of the bitstream set for macroblocks/sub macroblocks; and motion vectors set in macroblocks/sub macroblocks, in accordance with the specifications of H.264 are extracted.

As for the bit amounts used for predictive encoding, bit amounts used for transform encoding, and bit amounts used for encoding control of the bitstream, $Bit_{max}$ described in the fifth embodiment is used to derive EV. Deriving the representative value of motion vectors is the same as that already described in the second embodiment with reference to Figs. 2, 3, and 4, and a description thereof will not be repeated.

Using the thus derived representative value $MV_{kurt}$ of all motion vectors of the assessment video and the representative value $Bit_{max}$ of all bit amount sums of the assessment video, the subjective quality EV of the assessment video V is estimated. EV is derived by the following equation. $MV_{kurt}$ in the following equation represents the magnitude of the vector.

[Mathematical 21]

$$EV = \frac{b}{1 + \exp\left(\frac{eBit_{max} + fMV_{kurt} + gBit_{max}MV_{kurt} - a}{c}\right)} + h\log(MV_{kurt})$$
$$+ iMV_{kurt} + j\log(Bit_{max}) + kBit_{max} + lBit_{max}MV_{kurt} + m\log(MV_{kurt})\log(Bit_{max}) + d$$

where a, b, c, d, e, f, g, h, i, j, k, l, and m are coefficients optimized by conducting subjective assessment experiments and performing regression analysis in advance. Note that as the scale of EV, ACR described in reference 2 or DSIS or DSCQS described in reference 3 is usable.

(Seventh Embodiment)

In the seventh embodiment, a bit amount sum statistic calculation unit 14, frame type statistic calculation unit 13, and integration unit 20 are provided, as shown in Fig. 12. Subjective quality EV of an assessment video V encoded by H.264 is objectively estimated using not only bit amounts used for predictive encoding, bit amounts used for transform encoding, and bit amounts used for encoding control of the bitstream used in H.264 encoding but also the statistical information of I slices, P slices, and B slices. Note that a switching I slice is regarded as an I slice, and a switching P slice is regarded as a P slice. This method is theoretically applicable to an encoding method using DCT coefficients and motion compensation.

The procedure of this embodiment will briefly be described next. Referring to Fig. 12, an encoded bitstream is first input to the bit amount sum statistic calculation unit 14 and the frame type statistic calculation unit 13. The bit amount sum statistic calculation unit 14 extracts bit amount sums from the bitstream, and derives a representative value $Bit_{max}$ of the bit amount sums in accordance with the following algorithm. The frame type statistic calculation unit 13 extracts a frame type from the bitstream, and derives a frame type statistic R in accordance with the following algorithm. Next, the integration unit 20 estimates the subjective quality EV of the assessment video V from the representative value $Bit_{max}$ of the bit amount sums and the frame type statistic R in accordance with the following algorithm.

This procedure is illustrated by the flowchart of Fig. 21. The specifications of an H.264 bit string are described in reference 1. Pieces of information of bit amounts used for predictive encoding, bit amounts used for transform encoding, and bit amounts used for encoding control set for macroblocks, and I/P/B attributes set for slices, in accordance with the specifications of H.264 are extracted.

As for the bit amounts used for predictive encoding, bit amounts used for transform encoding, and bit amounts used for encoding control of the bitstream, $Bit_{max}$ described in the fifth embodiment is used to derive EV.

As for the I/P/B attribute set for each slice, $S_I$ is derived by counting I slices in the assessment video, $S_P$ is derived by counting P slices, and $S_B$ is derived by counting B slices, as described in the third embodiment. Ratios $R_{SI}$, $R_{SP}$, $R_{SB}$, and $R_{SPB}$ of the slice counts to the total number of slices are derived as parameters. Correlations to subjective quality derived in advance by conducting subjective assessment experiments and performing regression analysis using these parameters are compared, and a parameter corresponding to the highest subjective quality estimation accuracy is defined as R.

Using the thus derived parameter R and $Bit_{max}$, the subjective quality EV of the assessment video V is estimated. EV is derived by

[Mathematical 22]

$$EV = \cfrac{b}{1 + \exp\left(\cfrac{eBit_{max} + fR + gBit_{max}R - a}{c}\right)} + h\log(R)$$
$$+ iR + j\log(Bit_{max}) + kBit_{max} + lBit_{max}R + m\log(R)\log(Bit_{max}) + d$$

where a, b, c, d, e, f, g, h, i, j, k, l, and m are coefficients optimized by conducting subjective assessment experiments and performing regression analysis in advance. Note that as the scale of EV, ACR described in reference 2 or DSIS or DSCQS described in reference 3 is usable.

(Eighth Embodiment)

In the eighth embodiment, a bit amount sum statistic calculation unit 14, motion vector statistic calculation unit 12, frame type statistic calculation unit 13, and integration unit 20 are provided, as shown in Fig. 13. Subjective quality EV of an assessment video V encoded by H.264 is objectively estimated using not only bit amounts used for predictive encoding, bit amounts used for transform encoding, and bit amounts used for encoding control of the bitstream used in H.264 encoding but also the information of motion vectors and I slices, P slices, and B slices. Note that a switching I slice is regarded as an I slice, and a switching P slice is regarded as a P slice. This method is theoretically applicable to an encoding method using DCT coefficients and motion compensation.

The procedure of this embodiment will briefly be described next. Referring to Fig. 13, an encoded bitstream is first input to the bit amount sum statistic calculation unit 14, motion vector statistic calculation unit 12, and the frame type statistic calculation unit 13. The bit amount sum statistic calculation unit 14 extracts bit amount sums from the bitstream, and derives a representative value $Bit_{max}$ of the bit amount sums in accordance with the following algorithm. The motion vector statistic calculation unit 12 extracts motion vectors from the bitstream, and derives a representative value $MV_{kurt}$ of the motion vectors in accordance with the following algorithm. The frame type statistic calculation unit 13 extracts a frame type from the bitstream, and derives a frame type statistic R in accordance with the following algorithm. Next, the integration unit 20 estimates the subjective quality EV of the assessment video V from the representative value $Bit_{max}$ of the bit amount sums, the representative value $MV_{kurt}$ of the motion vectors, and the frame type statistic R in accordance with the following algorithm.

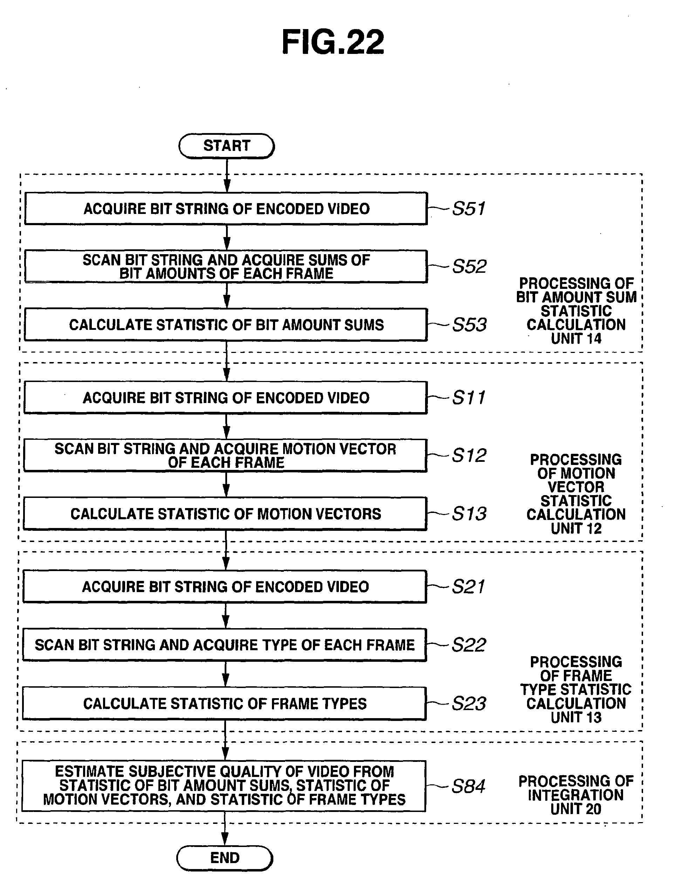

This procedure is illustrated by the flowchart of Fig. 22. The specifications of an H.264 bit string are described in reference 1. Pieces of information of bit amounts used for predictive encoding, bit amounts used for transform encoding, and bit amounts used for encoding control of the bitstream set for macroblocks; I/P/B attributes set for slices; and motion vectors set for macroblocks/sub macroblocks, in accordance with the specifications of H.264 are extracted.

As for the bit amounts used for predictive encoding, bit amounts used for transform encoding, and bit amounts used for encoding control of the bitstream, $Bit_{max}$ described in the fifth embodiment is used to derive EV.
As for the motion vectors, $MV_{kurt}$ described in the second embodiment is used to derive EV.
As for the I slices, P slices, and B slices, R described in the third embodiment is used.

Using thus derived $MV_{kurt}$, R, and $Bit_{max}$, the subjective quality EV of the assessment video V is estimated. EV is derived by the following equation. $MV_{kurt}$ in the equation below represents the magnitude of the vector.

[Mathematical 23]

$$EV = \cfrac{b}{1 + \exp\left(\cfrac{eBit_{max} + fR + gMV_{kurt} + hBit_{max}R + iR_{S_j}MV_{kurt} + jMV_{kurt}Bit_{max} + kBit_{max}RMV_{kurt} - a}{c}\right)}$$
$$+ l\log(R) + mR + n\log(Bit_{max}) + oBit_{max} + p\log(MV_{kurt}) + qMV_{kurt} + rBit_{max}R + sRMV_{kurt}$$
$$+ tMV_{kurt}Bit_{max} + uBit_{max}RMV_{kurt} + v\log(Bit_{max})\log(R) + w\log(MV_{kurt})\log(R) + x(MV_{kurt})\log(Bit_{max})$$
$$+ y\log(Bit_{max})\log(R)\log(MV_{kurt}) + d$$

where a, b, c, d, e, f, g, h, i, j, k, l, m, o, p, q, r, s, t, u, v, w, x, and y are coefficients optimized by conducting subjective assessment experiments and performing regression analysis in advance. Note that as the scale of EV, ACR described in reference 2 or DSIS or DSCQS described in reference 3 is usable.

(Ninth Embodiment)

In the ninth embodiment, an I slice/P slice/B slice bit amount sum statistic calculation unit 15, I slice/P slice/B slice quantization information statistic calculation unit 16, and subjective quality estimation unit 17 are provided, as shown in Fig. 14. Subjective quality EV of an assessment video V encoded by H.264 is objectively estimated using not only bit amounts used for predictive encoding, bit amounts used for transform encoding, and bit amounts used for encoding control of I slices, P slices, and B slices of the bitstream used in H.264 encoding but also quantization parameters (quantization information) of the I slices, P slices, and B slices. Note that a switching I slice is regarded as an I slice, and a switching P slice is regarded as a P slice.

The procedure of this embodiment will briefly be described next. Referring to Fig. 14, an encoded bitstream is first input to the I slice/P slice/B slice bit amount sum statistic calculation unit 15. The calculation unit 15 derives the bit amounts of the I slices, P slices, and B slices separately in correspondence with motion vectors, quantization coefficients, or encoding control information. Next, the I slice/P slice/B slice quantization information statistic calculation unit 16 extracts the quantization information in the I slices, P slices, and B slices, and derives statistics $QP_{min}(I)$, $QP_{min}(P)$, and $QP_{min}(B)$ of the quantization information of the I slices, P slices, and B slices in accordance with the following algorithm.

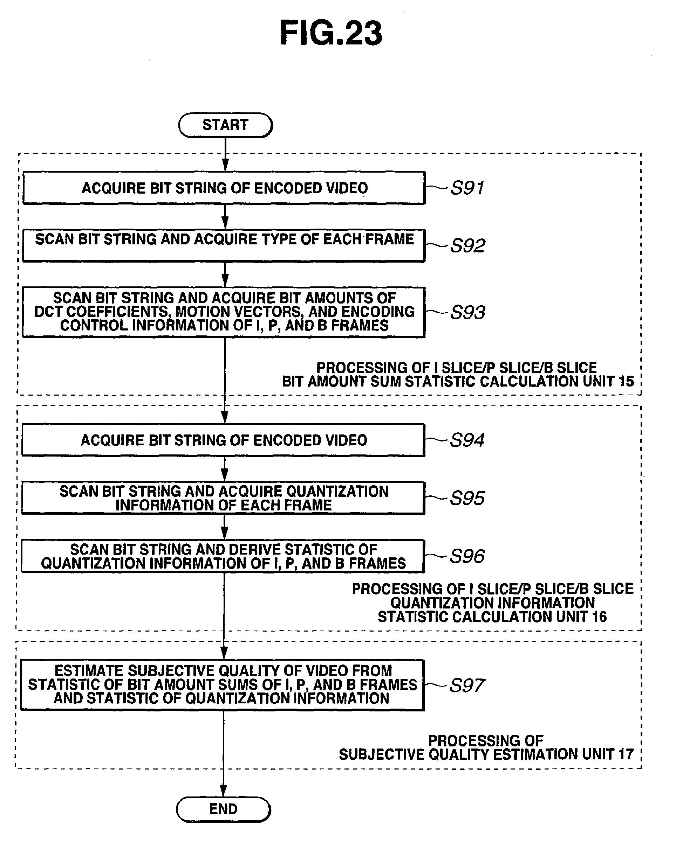

Then, the subjective quality estimation unit 17 estimates the subjective quality EV of the assessment video V in accordance with the following algorithm using the statistics $QP_{min}(I)$, $QP_{min}(P)$, and $QP_{min}(B)$, and the like. This procedure is illustrated by the flowchart of Fig. 23. The specifications of an H.264 bit string are described in reference 1. Pieces of information of bit amounts used for predictive encoding, bit amounts used for transform encoding, and bit amounts used for encoding control of the bitstream set for macroblocks; and I/P/B attributes set for slices, in accordance with the specifications of H.264 are extracted.

As for the bit amounts used for predictive encoding, bit amounts used for transform encoding, and bit amounts used for encoding control of the I slices, P slices, and B slices, the bit amounts used for predictive encoding, bit amounts used for transform encoding, and bit amounts used for encoding control of the I slices are defined as $Bit_{pred}(I)$, $Bit_{res}(I)$, and $Bit_{other}(I)$, respectively. The bit amounts used for predictive encoding, bit amounts used for transform encoding, and bit amounts used for encoding control of the P slices are defined as $Bit_{pred}(P)$, $Bit_{res}(P)$, and $Bit_{other}(P)$, respectively. The bit amounts used for predictive encoding, bit amounts used for transform encoding, and bit amounts used for encoding control of the B slices are defined as $Bit_{pred}(B)$, $Bit_{res}(B)$, and $Bit_{other}(B)$, respectively. Each bit amount may be either the bit amount of all slices of the assessment video or the bit amount of slices that exist within a specific time. In addition, values $Bit_{pred}(BP)$, $Bit_{res}(BP)$, and $Bit_{other}(BP)$ are defined, and derived by

$$Bit_{pred}(BP) = Bit_{pred}(B) + Bit_{pred}(P)$$

$$Bit_{res}(BP) = Bit_{res}(B) + Bit_{res}(P)$$

$$Bit_{other}(BP) = Bit_{other}(B) + Bit_{other}(P)$$

As the quantization information, $QP_{min}(I)$ obtained by applying the process of deriving $QP_{min}$ of each slice described in the first embodiment to only the I slices, $QP_{min}(P)$ obtained by applying the process to only the P slices, and $QP_{min}(B)$ obtained by applying the process to only the B slices are used.

More specifically, the I/P/B attributes are determined for all slices of the assessment video V. Using the values of the quantization information of all macroblocks (m macroblocks in total) existing in each slice, the representative value $QP_{min}(i)$ of the quantization information of each slice is derived by the following equation, where i is the slice number (video playback starts from i = 1 and ends at i = n).

$$[Mathematical\ 24]$$

$$QP_{min}(i) = \min_{j=1}^{j=m} QP_{ij}$$

where $QP_{ij}$ is the quantization information of the jth macroblock in the ith slice (Fig. 1). The operator

[Mathematical 25]

$$\min_{j=1}^{j=m} A_j$$

outputs a minimum value by referring to natural numbers $A_1$ to $A_m$.

With the above processing, quantization information having the minimum value in the ith slice is derived. When quantization information becomes smaller, finer quantization is applied to the macroblock. Hence, a macroblock which undergoes finest quantization is derived by the processing. The more complex a video image is, the finer the quantization needs to be. That is, the above-described processing aims at specifying a macroblock having the most complex image in the ith slice.

Note that in place of $QP_{min}(i)$, another parameter such as an average value $QP_{ave}(i)$, minimum value, or maximum value is usable in the following processing. $QP_{ave}(i)$ is derived by

[Mathematical 26]

$$QP_{ave}(i) = \operatorname*{ave}_{j=1}^{j=m} QP_{ij}$$

The operator

[Mathematical 27]

$$\operatorname*{ave}_{j=1}^{j=m} A_j$$

outputs an average value by referring to the natural numbers $A_1$ to $A_m$.

Using the thus derived representative value $QP_{min}(i)$ of the quantization information of each slice, the representative value $QP_{min}$ of all quantization information of the assessment video is derived next. $QP_{min}$ is derived by

[Mathematical 28]

$$QP_{min} = \operatorname*{ave}_{i=1}^{i=n} QP_{min}(i)$$

Values obtained by applying the reference frame deriving processing to the I/P/B attributes are defined as $QP_{min}(I)$, $QP_{min}(P)$, and $QP_{min}(B)$, respectively. In addition, a value $QP_{min}(BP)$ is defined, and derived by

$$QP_{min}(BP) = (QP_{min}(B) + QP_{min}(P))/2$$

Next, the subjective quality EV of the assessment video V is estimated. Considering nonlinearity that exists between bit amounts of the I, P, and B slices, the representative value of the quantization information, and the subjective quality EV in H.264, the subjective quality EV is derived by

[Mathematical 29]

$$EV = a + \frac{b}{1 + \exp\left(-c \times \left(QP_{min}(I) - d\right)\right)} \times \exp\left(-\frac{\left(Bit_{res}(I) - e\right)}{f}\right)$$
$$+ \frac{g}{1 + \exp\left(-h \times \left(QP_{min}(BP) - i\right)\right)} \times \exp\left(-\frac{\left(Bit_{res}(BP) - j\right)}{k}\right)$$
$$+ \frac{1}{1 + \exp\left(-c \times \left(QP_{min}(I) - d\right)\right)} + m \times \exp\left(-\frac{\left(Bit_{res}(I) - e\right)}{f}\right)$$
$$+ \frac{n}{1 + \exp\left(-h \times \left(QP_{min}(BP) - i\right)\right)} + o \times \exp\left(-\frac{\left(Bit_{res}(BP) - j\right)}{k}\right)$$
$$+ \frac{p}{1 + \exp\left(-c \times \left(QP_{min}(I) - d\right)\right)} \times \exp\left(-\frac{\left(Bit_{res}(I) - e\right)}{f}\right)$$
$$\times \frac{1}{1 + \exp\left(-h \times \left(QP_{min}(BP) - i\right)\right)} \times \exp\left(-\frac{\left(Bit_{res}(BP) - j\right)}{k}\right)$$

$$\begin{pmatrix} a, b, c, d, e, f, g, h, i, j, k, l, m, n, o : \text{coefficients.} \\ QP_{min}(I) : \text{representative value of quantization parameters of I frame} \\ QP_{min}(BP) : \text{representative value of quantization parameters of BP frame} \\ Bit_{res}(I) : \text{bit amount used for tranform encoding of I frame} \\ Bit_{res}(BP) : \text{bit amount used for tranform encoding of BP frame} \end{pmatrix}$$

where a, b, c, d, e, f, g, h, i, j, k, l, m, n, and o are coefficients optimized by conducting subjective assessment experiments and performing regression analysis in advance. Note that as the scale of EV, ACR described in reference 2 or DSIS or DSCQS described in reference 3 is usable.

In place of $Bit_{res}(I)$ and $Bit_{res}(BP)$, $Bit_{pred}(I)$ and $Bit_{pred}(BP)$, bit amount ratios $R_{res}(I)$ and $R_{res}(BP)$ to defined below, or $Bit_{other}(I)$ and $Bit_{other}(BP)$ are usable. Various statistical operations such as a sum, average, and variance may be applied and superimposed in accordance with the combination of cases, thereby deriving the subjective quality. In the above-described equations, the nonlinearity may be considered based on not the exponential function but a logarithmic function, polynomial function, or a reciprocal thereof.

[Mathematical 30]

$$R_{res}(I) = \frac{Bit_{res}(I)}{Bit_{res}(I) + Bit_{res}(P) + Bit_{res}(B)}$$
$$R_{res}(BP) = \frac{Bit_{res}(P) + Bit_{res}(B)}{Bit_{res}(I) + Bit_{res}(P) + Bit_{res}(B)}$$

In this embodiment, the operations are performed for each slice. However, the unit of operations may be changed to a macroblock, frame, GoP, entire video, or the like.

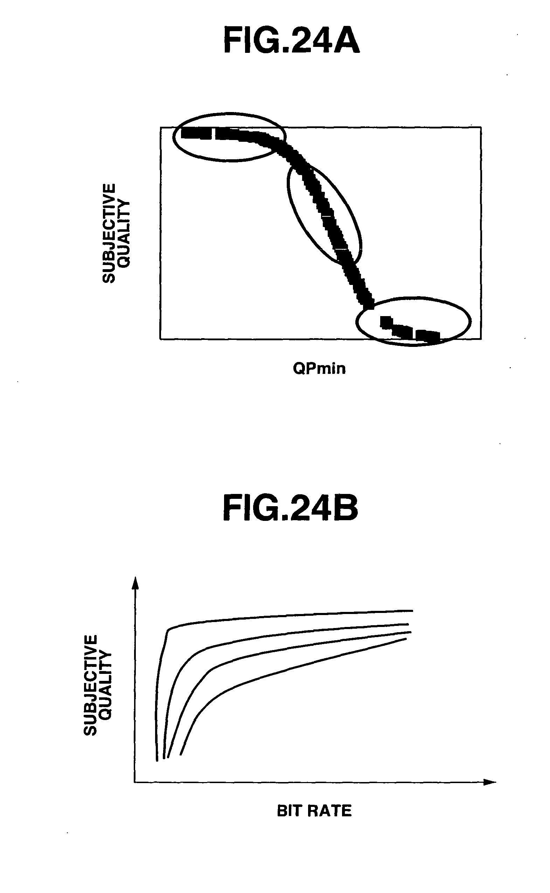

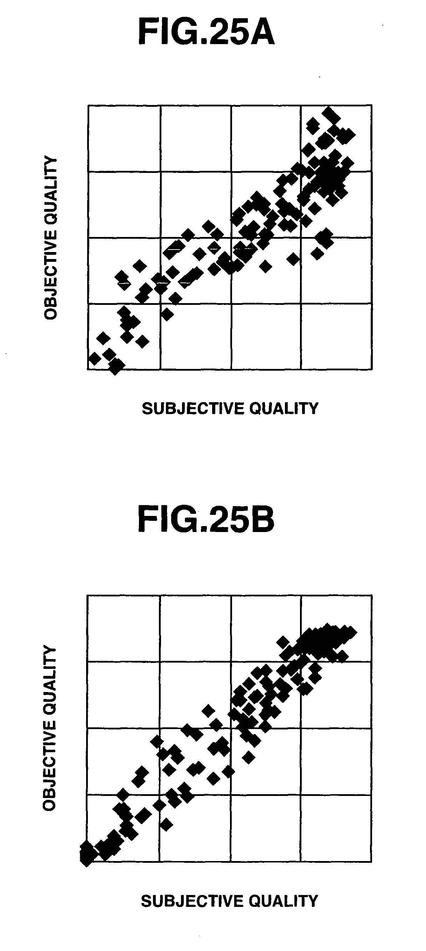

Note that the nonlinear relationship holds between the subjective quality EV and the representative value of the quantization parameters, as described above. Figs. 24A and 24B show the relationship. Fig. 24A shows a state in which the subjective quality is saturated in a region where $QP_{min}$ is small, abruptly changes in a region where $QP_{min}$ is medium, and is saturated in a region where $QP_{min}$ is large. Fig. 24B shows the relationship between the subjective quality and the bit rate of scenes 1, 2, 3, and 4 sequentially from above, indicating that the subjective quality varies depending on the difficulty level of encoding. More accurate quality estimation can be performed considering the characteristic existing between the subjective quality EV and the representative value of the quantization parameters. For reference purposes, Figs. 25A and 25B show an estimation result obtained by estimating subjective quality by applying an average and standard deviation that are general statistics, and an estimation result obtained by estimating subjective quality using the model of the present invention, respectively. In Figs. 25A and 25B, the abscissa represents the subjective quality acquired by subjective quality assessment experiments, and the ordinate represents objective quality obtained by estimating the subjective quality.

In the general model using the average and standard deviation, the estimation accuracy degrades because the saturation characteristic shown in Figs. 24A and 24B cannot sufficiently be taken into consideration, as shown in Figs. 25A and 25B. In the present invention, however, the characteristics can correctly be taken into consideration so that the estimation accuracy improves.

**Claims**

1. A video quality objective assessment method of assessing subjective quality of a video, comprising the steps of:

   receiving a bit string of the video encoded using motion-compensated inter-frame prediction and DCT or another orthogonal transformation such as wavelet transformation;

   performing a predetermined operation by inputting information included in the received bit string; and

   performing an operation of estimating the subjective quality of the video based on an operation result of the step of performing the predetermined operation.

2. A video quality objective assessment method according to claim 1, wherein

   in the step of performing the predetermined operation, quantization information included in the bit string is extracted, and a statistic of the quantization information is calculated, and

   in the step of performing the operation of estimating the subjective quality, the operation of estimating the subjective quality of the video is performed based on the statistic of the quantization information.

3. A video quality objective assessment method according to claim 2, wherein

   in the step of performing the predetermined operation, information of a motion vector included in the bit string is extracted, and a statistic of the motion vector is calculated from the extracted information of the motion vector, and

   in the step of performing the operation of estimating the subjective quality, the operation of estimating the subjective quality of the video is performed based on the statistic of the quantization information and the statistic of the motion vector.

4. A video quality objective assessment method according to claim 2, wherein

   in the step of performing the predetermined operation, information of an I (intra-coded) frame, slice, or block of motion-compensated inter-frame prediction, a P (forward predictive) frame, slice, or block, and a B (bidirectionally predictive) frame, slice, or block included in the bit string is extracted, and statistical information of the I (intra-coded) frame, slice, or block, the P (forward predictive) frame, slice, or block, and the B (bidirectionally predictive) frame, slice, or block is calculated based on the extracted information of the I (intra-coded) frame, slice, or block, the P (forward predictive) frame, slice, or block, and the B (bidirectionally predictive) frame, slice, or block, and

   in the step of performing the operation of estimating the subjective quality, the operation of estimating the subjective quality of the video is performed based on the statistic of the quantization information and the statistical information of the I (intra-coded) frame, slice, or block, the P (forward predictive) frame, slice, or block, and the B (bidirectionally predictive) frame, slice, or block.

5. A video quality objective assessment method according to claim 1, wherein

   in the step of performing the predetermined operation, information used for predictive encoding, information for transform encoding, and information used for encoding control, which are included in the bit string, are extracted, and a bit amount used for predictive encoding, a bit amount used for transform encoding, and a bit amount used for encoding control are calculated from the pieces of extracted information, and

   in the step of performing the operation of estimating the subjective quality, the operation of estimating the subjective quality of the video is performed based on the bit amount used for predictive encoding, the bit amount used for transform encoding, and the bit amount used for encoding control, which represent the operation result of the step of performing the predetermined operation.

6. A video quality objective assessment method according to claim 5, wherein

   in the step of performing the predetermined operation, information of a motion vector included in the bit string is extracted, and a statistic of the motion vector is calculated from the extracted information of the motion vector, and

   in the step of performing the operation of estimating the subjective quality, the operation of estimating the subjective quality of the video is performed based on the bit amount used for predictive encoding, the bit amount used for transform encoding, the bit amount used for encoding control, and the statistic of the motion vector.

7. A video quality objective assessment method according to claim 5, wherein

   in the step of performing the predetermined operation, information of an I (intra-coded) frame, slice, or block, a P (forward predictive) frame, slice, or block, and a B (bidirectionally predictive) frame, slice, or block included in the bit string is extracted, and statistical information of the I (intra-coded) frame, slice, or block, the P (forward predictive) frame, slice, or block, and the B (bidirectionally predictive) frame, slice, or block is calculated based on the extracted information of the I (intra-coded) frame, slice, or block, the P (forward predictive) frame, slice, or block, and the B

16

(bidirectionally predictive) frame, slice, or block, and
in the step of performing the operation of estimating the subjective quality, the operation of estimating the subjective quality of the video is performed based on the bit amount used for predictive encoding, the bit amount used for transform encoding, the bit amount used for encoding control, and the statistical information of the I (intra-coded) frame, slice, or block, the P (forward predictive) frame, slice, or block, and the B (bidirectionally predictive) frame, slice, or block.

8. A video quality objective assessment method according to claim 1, wherein
in the step of performing the predetermined operation, statistics of a bit amount of an I slice, a P slice, and a B slice and quantization information of the I slice, the P slice, and the B slice included in the bit string are extracted, and
in the step of performing the operation of estimating the subjective quality, the operation of estimating the subjective quality of the video is performed based on the bit amount and the quantization information.

9. A video quality objective assessment method according to claim 8, wherein the bit amount includes a bit amount used for predictive encoding, a bit amount used for transform encoding, and another bit amount used for encoding control, which are calculated from information obtained by extracting information used for predictive encoding, information used for transform encoding, and information used for encoding control included in the bit string.

10. A video quality objective assessment method according to claim 8, wherein the bit amount includes a sum of bit amounts used for predictive encoding of the P slice and the B slice, a sum of bit amounts used for transform encoding, and a sum of other bit amounts used for encoding control.

11. A video quality objective assessment method according to claim 8, wherein the quantization information is one of an average value of the quantization information included in the bit string of the P slice and the B slice and a statistic obtained by addition, multiplication, or an exponential/logarithmic operation.

12. A video quality objective assessment method according to any one of claims 1 to 11, wherein the subjective quality of the video is estimated using an I macroblock and an I frame in place of the I slice, a P macroblock and a P frame in place of the P slice, and a B macroblock and a B frame in place of the B slice.

13. A video quality objective assessment method according to any one of claims 1 to 11, wherein an I mode does not use motion compensation, a P mode performs motion compensation from one reference frame, and a B mode performs motion compensation from at least two reference frames.

14. A video quality objective assessment apparatus for assessing subjective quality of a video, comprising:

a reception unit which receives a bit string of the video encoded using motion-compensated inter-frame prediction and DCT or another orthogonal transformation such as wavelet transformation;
a first operation unit which performs a predetermined operation by inputting information included in the received bit string; and
a second operation unit which performs an operation of estimating the subjective quality of the video based on an operation result of said first operation unit.

15. A program which causes a computer to execute:

reception processing of receiving a bit string of the video encoded using motion-compensated inter-frame prediction and DCT or another orthogonal transformation such as wavelet transformation;
arithmetic processing of performing a predetermined operation by inputting information included in the bit string received based on the reception processing; and
subjective quality estimation processing of performing an operation of estimating the subjective quality of the video based on an operation result of the arithmetic processing.

# FIG.1

**VIDEO SEQUENCE FOR ASSESSMENT V (n FRAMES IN TOTAL)**

FRAME i

| MACROBLOCK MB1 (QUANTIZATION PARAMETER QPi1) | MACROBLOCK MB2 (QUANTIZATION PARAMETER QPi2) | MACROBLOCK MB3 (QUANTIZATION PARAMETER QPi3) | - - - - - - - - |
|---|---|---|---|

MACROBLOCK MBm (QUANTIZATION PARAMETER QPim)

# FIG.2

MOTION VECTOR
DERIVING TARGET FRAME

SUCCEEDED        PRECEDED

−3   −2   −1   0   +1   +2   +3

TIME

# FIG.3

REFERENCE
FRAME

MOTION VECTOR
DERIVING TARGET FRAME i

DISTANCE = p     DISTANCE = 1

MOTION VECTOR
MVij

VECTOR
MV'ij

BLOCK
MBij

−p       −1      0

TIME

# FIG.4

MOTION VECTOR
DERIVING TARGET FRAME i

REFERENCE
FRAME

DISTANCE = 1     DISTANCE = q

MOTION VECTOR
MVij

VECTOR
MV'ij

BLOCK
MBij

0      1       q

TIME

# FIG.5

INPUT
VIDEO → 6 H.264 ENCODER → TRANSMISSION NETWORK → BIT STRING →

**1 VIDEO QUALITY OBJECTIVE ASSESSMENT APPARATUS**

2 RECEPTION UNIT → 3 ARITHMETIC UNIT → 5 OUTPUT UNIT

STORAGE MEDIUM 4

# FIG.6

BITSTREAM → 11 QUANTIZATION PARAMETER STATISTIC CALCULATION UNIT → 20 INTEGRATION UNIT → SUBJECTIVE QUALITY EV

# FIG.7

BITSTREAM → 11 QUANTIZATION PARAMETER STATISTIC CALCULATION UNIT → 20 INTEGRATION UNIT → SUBJECTIVE QUALITY EV

12 MOTION VECTOR STATISTIC CALCULATION UNIT →

# FIG.8

# FIG.9

# FIG.10

# FIG.11

BIT AMOUNT SUM
STATISTIC CALCULATION UNIT
/14

MOTION VECTOR
STATISTIC CALCULATION UNIT
/12

BITSTREAM

INTEGRATION
UNIT
20

SUBJECTIVE
QUALITY EV

# FIG.12

BIT AMOUNT SUM
STATISTIC CALCULATION UNIT
/14

FRAME TYPE
STATISTIC CALCULATION UNIT
/13

BITSTREAM

INTEGRATION
UNIT
20

SUBJECTIVE
QUALITY EV

# FIG.13

BIT AMOUNT SUM
STATISTIC CALCULATION UNIT
/14

MOTION VECTOR
STATISTIC CALCULATION UNIT
/12

FRAME TYPE
STATISTIC CALCULATION UNIT
/13

BITSTREAM

INTEGRATION
UNIT
20

SUBJECTIVE
QUALITY EV

# FIG.14

BITSTREAM

I SLICE/P SLICE/B SLICE
BIT AMOUNT SUM
STATISTIC CALCULATION UNIT ──S15

I SLICE/P SLICE/B SLICE
QUANTIZATION INFORMATION
STATISTIC CALCULATION UNIT ──S16

SUBJECTIVE QUALITY
ESTIMATION UNIT ──S17

SUBJECTIVE
QUALITY EV

# FIG.15

START

ACQUIRE BIT STRING OF ENCODED VIDEO ──S1

SCAN BIT STRING AND ACQUIRE QUANTIZATION
INFORMATION OF EACH FRAME ──S2

CALCULATE STATISTIC OF QUANTIZATION INFORMATION ──S3

PROCESSING OF
QUANTIZATION
INFORMATION
(QUANTIZATION
PARAMETER)
STATISTIC
CALCULATION
UNIT 11

ESTIMATE SUBJECTIVE QUALITY OF VIDEO FROM
STATISTIC OF QUANTIZATION INFORMATION ──S4

PROCESSING OF
INTEGRATION
UNIT 20

END

# FIG.16

START

| ACQUIRE BIT STRING OF ENCODED VIDEO | ~S1 | PROCESSING OF QUANTIZATION INFORMATION (QUANTIZATION PARAMETER) STATISTIC CALCULATION UNIT 11 |
|---|---|---|
| SCAN BIT STRING AND ACQUIRE QUANTIZATION INFORMATION OF EACH FRAME | ~S2 | |
| CALCULATE STATISTIC OF QUANTIZATION INFORMATION | ~S3 | |

| ACQUIRE BIT STRING OF ENCODED VIDEO | ~S11 | PROCESSING OF MOTION VECTOR STATISTIC CALCULATION UNIT 12 |
|---|---|---|
| SCAN BIT STRING AND ACQUIRE MOTION VECTOR OF EACH FRAME | ~S12 | |
| CALCULATE STATISTIC OF MOTION VECTORS | ~S13 | |

| ESTIMATE SUBJECTIVE QUALITY OF VIDEO FROM STATISTIC OF QUANTIZATION INFORMATION AND STATISTIC OF MOTION VECTORS | ~S14 | PROCESSING OF INTEGRATION UNIT 20 |
|---|---|---|

END

# FIG.17

START

| ACQUIRE BIT STRING OF ENCODED VIDEO | ~S1 | PROCESSING OF QUANTIZATION INFORMATION (QUANTIZATION PARAMETER) STATISTIC CALCULATION UNIT 11 |
|---|---|---|
| SCAN BIT STRING AND ACQUIRE QUANTIZATION INFORMATION OF EACH FRAME | ~S2 | |
| CALCULATE STATISTIC OF QUANTIZATION INFORMATION | ~S3 | |

| ACQUIRE BIT STRING OF ENCODED VIDEO | ~S21 | PROCESSING OF FRAME TYPE STATISTIC CALCULATION UNIT 13 |
|---|---|---|
| SCAN BIT STRING AND ACQUIRE TYPE OF EACH FRAME | ~S22 | |
| CALCULATE STATISTIC OF FRAME TYPES | ~S23 | |

| ESTIMATE SUBJECTIVE QUALITY OF VIDEO FROM STATISTIC OF QUANTIZATION INFORMATION AND STATISTIC OF FRAME TYPES | ~S24 | PROCESSING OF INTEGRATION UNIT 20 |
|---|---|---|

END

# FIG.18

START

| | | PROCESSING OF QUANTIZATION INFORMATION (QUANTIZATION PARAMETER) STATISTIC CALCULATION UNIT 11 |
|---|---|---|
| ACQUIRE BIT STRING OF ENCODED VIDEO | S1 | |
| SCAN BIT STRING AND ACQUIRE QUANTIZATION INFORMATION OF EACH FRAME | S2 | |
| CALCULATE STATISTIC OF QUANTIZATION INFORMATION | S3 | |

| | | PROCESSING OF MOTION VECTOR STATISTIC CALCULATION UNIT 12 |
|---|---|---|
| ACQUIRE BIT STRING OF ENCODED VIDEO | S11 | |
| SCAN BIT STRING AND ACQUIRE MOTION VECTOR OF EACH FRAME | S12 | |
| CALCULATE STATISTIC OF MOTION VECTORS | S13 | |

| | | PROCESSING OF FRAME TYPE STATISTIC CALCULATION UNIT 13 |
|---|---|---|
| ACQUIRE BIT STRING OF ENCODED VIDEO | S21 | |
| SCAN BIT STRING AND ACQUIRE TYPE OF EACH FRAME | S22 | |
| CALCULATE STATISTIC OF FRAME TYPES | S23 | |

| | | PROCESSING OF INTEGRATION UNIT 20 |
|---|---|---|
| ESTIMATE SUBJECTIVE QUALITY OF VIDEO FROM STATISTIC OF QUANTIZATION INFORMATION, STATISTIC OF MOTION VECTORS, AND STATISTIC OF FRAME TYPES | S44 | |

END

# FIG.19

START

| | | PROCESSING OF BIT AMOUNT SUM STATISTIC CALCULATION UNIT 14 |
|---|---|---|
| ACQUIRE BIT STRING OF ENCODED VIDEO | S51 | |
| SCAN BIT STRING AND ACQUIRE SUMS OF BIT AMOUNTS OF EACH FRAME | S52 | |
| CALCULATE STATISTIC OF BIT AMOUNT SUMS | S53 | |

| | | PROCESSING OF INTEGRATION UNIT 20 |
|---|---|---|
| ESTIMATE SUBJECTIVE QUALITY OF VIDEO FROM STATISTIC OF BIT AMOUNT SUMS | S54 | |

END

# FIG.20

( START )

ACQUIRE BIT STRING OF ENCODED VIDEO — S51

SCAN BIT STRING AND ACQUIRE SUMS OF BIT AMOUNTS OF EACH FRAME — S52

CALCULATE STATISTIC OF BIT AMOUNT SUMS — S53

PROCESSING OF BIT AMOUNT SUM STATISTIC CALCULATION UNIT 14

ACQUIRE BIT STRING OF ENCODED VIDEO — S11

SCAN BIT STRING AND ACQUIRE MOTION VECTOR OF EACH FRAME — S12

CALCULATE STATISTIC OF MOTION VECTORS — S13

PROCESSING OF MOTION VECTOR STATISTIC CALCULATION UNIT 12

ESTIMATE SUBJECTIVE QUALITY OF VIDEO FROM STATISTIC OF BIT AMOUNT SUMS AND STATISTIC OF MOTION VECTORS — S64

PROCESSING OF INTEGRATION UNIT 20

( END )

# FIG.21

( START )

ACQUIRE BIT STRING OF ENCODED VIDEO — S51

SCAN BIT STRING AND ACQUIRE SUMS OF BIT AMOUNTS OF EACH FRAME — S52

CALCULATE STATISTIC OF BIT AMOUNT SUMS — S53

PROCESSING OF BIT AMOUNT SUM STATISTIC CALCULATION UNIT 14

ACQUIRE BIT STRING OF ENCODED VIDEO — S21

SCAN BIT STRING AND ACQUIRE TYPE OF EACH FRAME — S22

CALCULATE STATISTIC OF FRAME TYPES — S23

PROCESSING OF FRAME TYPE STATISTIC CALCULATION UNIT 13

ESTIMATE SUBJECTIVE QUALITY OF VIDEO FROM STATISTIC OF BIT AMOUNT SUMS AND STATISTIC OF FRAME TYPES — S74

PROCESSING OF INTEGRATION UNIT 20

( END )

# FIG.22

```
                    ( START )
                         │
 ┌───────────────────────┼──────────────────────────┐
 │ ┌─────────────────────▼──────────────────────┐    │
 │ │    ACQUIRE BIT STRING OF ENCODED VIDEO      │─S51│
 │ └─────────────────────┬──────────────────────┘    │
 │ ┌─────────────────────▼──────────────────────┐    │  PROCESSING OF
 │ │     SCAN BIT STRING AND ACQUIRE SUMS OF     │─S52│  BIT AMOUNT SUM
 │ │        BIT AMOUNTS OF EACH FRAME            │    │  STATISTIC
 │ └─────────────────────┬──────────────────────┘    │  CALCULATION
 │ ┌─────────────────────▼──────────────────────┐    │  UNIT 14
 │ │    CALCULATE STATISTIC OF BIT AMOUNT SUMS   │─S53│
 │ └─────────────────────┬──────────────────────┘    │
 └───────────────────────┼──────────────────────────┘
 ┌───────────────────────┼──────────────────────────┐
 │ ┌─────────────────────▼──────────────────────┐    │
 │ │    ACQUIRE BIT STRING OF ENCODED VIDEO      │─S11│
 │ └─────────────────────┬──────────────────────┘    │
 │ ┌─────────────────────▼──────────────────────┐    │  PROCESSING
 │ │   SCAN BIT STRING AND ACQUIRE MOTION VECTOR │─S12│  OF MOTION
 │ │           OF EACH FRAME                     │    │  VECTOR
 │ └─────────────────────┬──────────────────────┘    │  STATISTIC
 │ ┌─────────────────────▼──────────────────────┐    │  CALCULATION
 │ │   CALCULATE STATISTIC OF MOTION VECTORS     │─S13│  UNIT 12
 │ └─────────────────────┬──────────────────────┘    │
 └───────────────────────┼──────────────────────────┘
 ┌───────────────────────┼──────────────────────────┐
 │ ┌─────────────────────▼──────────────────────┐    │
 │ │    ACQUIRE BIT STRING OF ENCODED VIDEO      │─S21│
 │ └─────────────────────┬──────────────────────┘    │
 │ ┌─────────────────────▼──────────────────────┐    │  PROCESSING
 │ │ SCAN BIT STRING AND ACQUIRE TYPE OF EACH FRAME│─S22│  OF FRAME
 │ └─────────────────────┬──────────────────────┘    │  TYPE STATISTIC
 │ ┌─────────────────────▼──────────────────────┐    │  CALCULATION
 │ │    CALCULATE STATISTIC OF FRAME TYPES       │─S23│  UNIT 13
 │ └─────────────────────┬──────────────────────┘    │
 └───────────────────────┼──────────────────────────┘
 ┌───────────────────────┼──────────────────────────┐
 │ ┌─────────────────────▼──────────────────────┐    │
 │ │  ESTIMATE SUBJECTIVE QUALITY OF VIDEO FROM  │    │  PROCESSING OF
 │ │  STATISTIC OF BIT AMOUNT SUMS, STATISTIC OF │─S84│  INTEGRATION
 │ │ MOTION VECTORS, AND STATISTIC OF FRAME TYPES│    │  UNIT 20
 │ └─────────────────────┬──────────────────────┘    │
 └───────────────────────┼──────────────────────────┘
                    (  END  )
```

# FIG.23

START

ACQUIRE BIT STRING OF ENCODED VIDEO — S91

SCAN BIT STRING AND ACQUIRE TYPE OF EACH FRAME — S92

SCAN BIT STRING AND ACQUIRE BIT AMOUNTS OF DCT COEFFICIENTS, MOTION VECTORS, AND ENCODING CONTROL INFORMATION OF I, P, AND B FRAMES — S93

PROCESSING OF I SLICE/P SLICE/B SLICE
BIT AMOUNT SUM STATISTIC CALCULATION UNIT 15

ACQUIRE BIT STRING OF ENCODED VIDEO — S94

SCAN BIT STRING AND ACQUIRE QUANTIZATION INFORMATION OF EACH FRAME — S95

SCAN BIT STRING AND DERIVE STATISTIC OF QUANTIZATION INFORMATION OF I, P, AND B FRAMES — S96

PROCESSING OF I SLICE/P SLICE/B SLICE
QUANTIZATION INFORMATION
STATISTIC CALCULATION UNIT 16

ESTIMATE SUBJECTIVE QUALITY OF VIDEO FROM STATISTIC OF BIT AMOUNT SUMS OF I, P, AND B FRAMES AND STATISTIC OF QUANTIZATION INFORMATION — S97

PROCESSING OF
SUBJECTIVE QUALITY ESTIMATION UNIT 17

END

# FIG.24A

QPmin

# FIG.24B

BIT RATE

# FIG.25A

SUBJECTIVE QUALITY

# FIG.25B

SUBJECTIVE QUALITY

## INTERNATIONAL SEARCH REPORT

| International application No. |
| --- |
| PCT/JP2009/055679 |

A.   CLASSIFICATION OF SUBJECT MATTER
*H04N17/00* (2006.01)i, *H04N7/26* (2006.01)i

According to International Patent Classification (IPC) or to both national classification and IPC

B.   FIELDS SEARCHED

Minimum documentation searched (classification system followed by classification symbols)
H04N17/00, H04N7/26

| Documentation searched other than minimum documentation to the extent that such documents are included in the fields searched | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y<br>A | WO 2007/066066 A1  (BRITISH TELECOMMUNICATIONS PLC.),<br>14 June, 2007 (14.06.07),<br>Page 3, line 4 to page 9, line 24; page 15, line 27 to page 16, line 2; Figs. 1 to 3<br>& US 2008/0317111 A1    & EP 1958454 A1<br>& JP 2009-518915 A | 1,2,12-15<br>3<br>4-11 |
| Y<br>A | WO 2006/043500 A1  (Nippon Telegraph And Telephone Corp.),<br>27 April, 2006 (27.04.06),<br>Par. Nos. [0048] to [0060]; Figs. 18 to 21<br>& US 2008/0143837 A1    & EP 1804519 A1<br>& KR 2007-0061855 A | 3<br>6 |

| ☒   Further documents are listed in the continuation of Box C. | ☐   See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    10 June, 2009 (10.06.09) | Date of mailing of the international search report<br>    30 June, 2009 (30.06.09) |
| --- | --- |
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/055679

C (Continuation). DOCUMENTS CONSIDERED TO BE RELEVANT

| Category* | Citation of document, with indication, where appropriate, of the relevant passages | Relevant to claim No. |
|---|---|---|
| E,X<br>E,A | WO 2009/025357 A1 (Nippon Telegraph And Telephone Corp.),<br>26 February, 2009 (26.02.09),<br>Par. Nos. [0015] to [0062]; Figs. 1 to 8<br>(Family: none) | 5<br>6-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Kazuhisa Yamagishi ; Takanori Hayashi.** Video Quality Estimation Model for IPTV Services. *Technical Report of IEICE, CQ2007-35,* July 2007, 123-126
- **D. Hands.** Quality Assurance for IPTV. *ITU-T Workshop on "End-to-End QoE/QoS",* June 2006
- Advanced video coding for generic audiovisual services. *ITU-T H.264,* February 2000
- TELEPHONE TRANSMISSION QUALITY, TELEPHONE INSTALLATIONS, LOCAL LINE NETWORKS. *ITU-T P.910,* September 1999
- Methodology for the subjective assessment of the quality of television pictures. *ITU-R BT.500,* 2002